# EUROPEAN PATENT APPLICATION

(11) **EP 4 404 087 A1**
(43) Date of publication of application: **24.07.2024**
(21) Application number: 23305077.2
(22) Date of filing: 23.01.2023
(51) Int. Cl.: G06F 21/52, G06F 11/16, G06F 21/70, G06F 9/30, G06F 21/71

(54) **A METHOD FOR SECURING A CENTRAL PROCESSING UNIT PIPELINE**

(71) Applicant: THALES DIS FRANCE SAS, 92190 Meudon (FR)
(72) Inventor: SINTZOFF, André, 92190 Meudon (FR); COULON, Jean Roch, 92190 Meudon (FR); TEGLIA, Yannick, 92190 Meudon (FR); CASAMATTA, Yannick, 92190 MEUDON (FR)
(74) Representative: Bricks, Amélie

(57) **Abstract**

The invention relates to a method for securing a central processing unit pipeline. According to the invention, the method comprises the steps of providing an integrity pipeline supervisor (IPS) comprising a decoder and a checker; providing the integrity pipeline supervisor with the instruction of the computer program; allowing the decoder of the integrity pipeline supervisor to decode the instruction provided to the integrity pipeline supervisor in order to obtain the decoded instruction structure; providing the checker with the structure of the instruction decoded by the decoder of the integrity pipeline supervisor; providing the checker with the structure of the instruction decoded by the decoder of the central processing unit; allowing the checker to compare the structure of the instruction decoded by the decoder of the integrity pipeline supervisor and the structure of the instruction decoded by the decoder of the central processing unit; and allowing an alarm indicator to be triggered if, as a result of the comparison, the checker detects a discrepancy between the structures.

## Description

### FIELD OF THE INVENTION

The invention relates to a method for securing a central processing unit pipeline against, in particular, fault injection attacks. This method comprises the steps of providing a central processing unit, the central processing unit comprising a fetcher, a decoder and means for executing computer program instructions decoded by the decoder; allowing an instruction of a computer program to be fetched by the fetcher of the central processing unit; allowing the decoder of the central processing unit to decode the instruction fetched in order to obtain a decoded instruction structure; and allowing the means for executing the instruction to execute the instruction according to its decoded structure. The invention also relates to a system for securing a central processing pipeline for the implementation of this method.

### BACKGROUND OF THE INVENTION

Fault injection attacks (FIAs) belong to a class of active physical attacks, that are mostly used for malicious purposes such as extraction of cryptographic keys, or privilege escalation.

Some FIAs may disrupt the Central Processing Unit (CPU) pipeline and generate modifications in the executed instructions. For example, such modifications, for one instruction, are: - an operation is changed (e.g. a "*OR*" becomes a *"ADD"*) - a source register is changed (e.g. "*a0*" becomes "*a1*") - a destination register is changed (e.g. "*a2*" becomes "*a3*") - an immediate value is changed (e.g. "*0x432*" becomes "*0x4B2*") or - a conditional branch is changed (e.g. "*branch if not equal*" becomes "*branch if equal*").

An existing solution, that intends to mitigate fault injections, is to add an Error Detection Code (EDC) for each internal control register existing at each stage implemented in the pipeline. The goal of the EDCs is to detect a possible fault. This requires to modify the code at the Register Transfer Level (RTL) in many places spread around all the pipeline stages. This becomes a problem, in particular, when the original RTL code evolves, as the EDC modifications are strongly coupled with the code of each of the pipeline stages. It also requires the EDC to have the ability to evolve through the pipeline stages while keeping its semantic, and is then imposing strong limitations on the type of codes that may be used. Finally, while an EDC is added to registers, the combinatory logic remains unprotected. The Program Counter (PC) register itself, that holds the memory address of the next instruction to be executed, could indeed be protected, but faults may still be inserted on the adder to increment a +4 increment for example.

Another existing solution relates to lockstep processors, which are multiple processors executing synchronously, or shifted by a small delay, same instructions, in parallel. Any difference between the processor outputs of each instruction is raising an alert. Such solution requires implementation of many resources, as the whole processor is duplicated or triplicated. Moreover, the system might still be sensitive to common mode errors as the processors are identical. Hence, a non-local error, e.g. glitch or an Electromagnetic Fault Injection (EMFI) might affect both processors in the same way, making countermeasures useless.

### SUMMARY OF THE INVENTION

Accordingly, a need exists for guarantying the integrity of the whole CPU pipeline, which means that a modification of an instruction information, during the pipeline execution, in particular due to a fault injection, will be detected.

In accordance with a first aspect, the invention concerns a method for securing a central processing unit pipeline comprising the steps of
providing a central processing unit, the central processing unit comprising a fetcher, a decoder and means for executing computer program instructions decoded by the decoder;
allowing an instruction of a computer program to be fetched by the fetcher of the central processing unit;
allowing the decoder of the central processing unit to decode the instruction fetched in order to obtain a decoded instruction structure;
allowing the means for executing the instruction to execute the instruction according to its decoded structure;
the method further comprising the steps of
providing an integrity pipeline supervisor, the integrity pipeline supervisor comprising a decoder and a checker;
providing the integrity pipeline supervisor with the instruction of the computer program;
allowing the decoder of the integrity pipeline supervisor to decode the instruction provided to the integrity pipeline supervisor in order to obtain the decoded instruction structure;
providing the checker with the structure of the decoded instruction by the decoder of the integrity pipeline supervisor;
providing the checker with the structure of the instruction decoded by the decoder of the central processing unit;
allowing the checker to compare the structure of the instruction decoded by the decoder of the integrity pipeline supervisor and the structure of the instruction decoded by the decoder of the central processing unit; and
allowing an alarm indicator to be triggered if, as a result of the comparison, the checker detects a discrepancy between the structure of the instruction decoded by the decoder of the integrity pipeline supervisor and the structure of the instruction decoded by the decoder of the central processing unit.

Preferentially, - the central processing unit further comprises an issuer, the issuer issuing the structure of the instruction decoded by the decoder of the central processing unit to the means for executing the decoded instruction ; - the structure of the instruction decoded by the decoder of the processing unit, which is provided to the checker of the integrity pipeline supervisor, is the whole structure of said instruction ; - the structure of the instruction decoded by the decoder of the processing unit, which is provided to the checker of the integrity pipeline supervisor, is a part of the whole structure of said instruction ; - the integrated pipeline supervisor further comprises a memory buffer and wherein an address of the instruction, that is provided to the central processing unit, is provided to said memory buffer so that the fetcher of the central processing unit pipeline is able to provide the instruction to the integrity pipeline supervisor; - the central processing unit further comprises means to commit the structure of the instruction with the integrity pipeline supervisor ; - the address of the instruction is provided by the means to commit the structure of the instruction to the memory buffer; - the steps, that are implemented in the integrity pipeline supervisor, are achieved in parallel with the steps that are implemented in the central processing pipeline ; - a time lag does exist between the time when the instruction is provided to the central processing unit pipeline, and the time when the instruction is provided to the integrity pipeline supervisor ; - the central processing unit has a Reduced Instruction Set Computer or an ARM central processing unit architecture; and - the Reduced Instruction Set Computer architecture is a Reduced Instruction Set Computer V (RISC-V) central processing unit architecture.

In accordance with a second aspect, the invention concerns a system for securing a central processing unit pipeline comprising
a central processing unit, the central processing unit comprising a fetcher, a decoder and means for executing computer program instructions decoded by the decoder;
an integrity pipeline supervisor, the integrity pipeline supervisor comprising a decoder and a checker;
an alarm indicator;
wherein :
   the decoder of the central processing unit decodes an instruction of a computer program allowed to be fetched by the fetcher of the central processing unit in order to obtain a decoded instruction structure;
   the means for executing the instruction execute the instruction according to its decoded structure;
   the integrity pipeline supervisor is provided with the instruction of the computer program;
   the decoder of the integrity pipeline supervisor decodes the instruction provided to the integrity pipeline supervisor in order to obtain the decoded instruction structure;
   the checker is provided with the structure of the instruction decoded by the decoder of the integrity pipeline supervisor;
   the checker is provided with the structure of the instruction decoded by the decoder of the central processing unit;
   the checker compares the structure of the instruction decoded by the decoder of the integrity pipeline supervisor and the structure of the instruction decoded by the decoder of the central processing unit; and
   the alarm indicator is triggered if, as a result of the comparison, the checker detects a discrepancy between the structure of the instruction decoded by the decoder of the integrity pipeline supervisor and the structure of the instruction decoded by the decoder of the central processing unit.

Hence, instead of adding an error detection code to each internal control registers, and detecting errors at each stage of the pipeline, the invention allows to detect discrepancies once. There is one verification done at the end of the pipeline.

### BRIEF DESCRIPTION OF THE DRAWINGS

Other features and aspects of the present invention will be apparent from the following description and the accompanying drawings, in which:

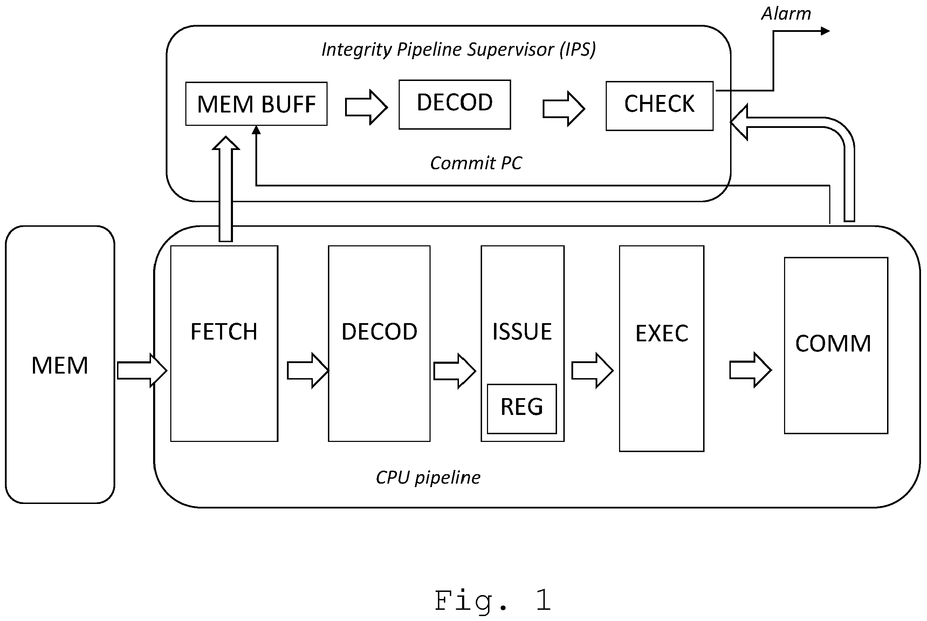

Fig. 1 illustrates the method according to the invention.

### DETAILLED DESCRIPTION OF THE INVENTION

The invention relates to a method for securing a central processing unit (CPU) pipeline of a computing architecture. This method is illustrated in Fig. 1.

The CPU has, in particular, a Reduced Instruction Set Computer (RISC) architecture, more particularly, a RISC-V CPU architecture, or an ARM CPU architecture.

The computing architecture is, in particular, a computer, for example a personal computer, a server, a mobile phone, a Distributed Integration Solution (DIS) product, an Integrated Secure Element (ISE) of a smart card.

As appearing in Fig. 1, the CPU pipeline comprises a fetcher FETCH, a decoder DECOD, an issuer component ISSUE including various registers REG, means EXEC for executing the decoded instructions, and means COMM to commit the structure of an instruction of the computer program. The means EXEC for executing the decoded instructions.

An additional set of components is however added to the CPU pipeline according to the invention. This additional set of components is part of the CPU or associated with it. It is named an Integrity Pipeline Supervisor (IPS).

The IPS comprises a memory buffer MEM BUFF, a decoder DECOD, a checker CHECK and means for triggering an alarm. The memory buffer is for example a hardware shift register or a circular buffer. The decoder DECOD of the IPS is a decoder that is similar or identical with the decoder of the CPU pipeline.

The various components of the CPU pipeline and, in particular, the fetcher FETCH, the decoder DECOD, the registers REG of the issuer ISSUE, the means EXEC for executing the decoded instructions, are components which are typically implemented in CPUs of the state of the art. Nevertheless, according to the invention, the fetcher FETCH is able to provide the memory buffer MEM BUFF of the IPS with computer program instructions, and the CPU pipeline comprises a commit component COMM that is able to provide the instruction structure as decoded by the decoder DECOD to the checker CHECK of the integrity pipeline supervisor IPS.

According to the method of the invention, a memory is provided. This memory is noted MEM in Fig. 1. It is part of the computing architecture comprising the CPU. The memory is, for example, a cache memory of the CPU. It stores instructions. These instructions are instructions of a computer program, that comprises a plurality of instructions. The instructions are to be executed within the CPU pipeline.

According to the invention, the instructions of the computer program, that are stored in the memory MEM, are provided to the CPU pipeline. Practically, the fetcher FTECH fetches the instructions from the memory. During the fetch stage, the address of the next instructions to be executed, that is stored in a Program Counter (PC), is copied into a Memory Address Register (MAR) and then the PC is incremented in order to point to the memory address of the next instruction to be executed. The CPU then takes the instruction at the memory address described by the MAR and copies it into a Memory Data Register (MDR). The MDR also acts as a two-way register that holds data fetched from memory or data waiting to be stored in memory. Eventually, the instruction in the MDR is copied into a Current Instruction Register (CIR) which acts as a temporary holding ground for the instruction that has just been fetched from the memory MEM.

According to the invention, the instructions, that are fetched, are decoded by the decoder DECOD of the CPU pipeline. More specifically, the encoded instruction is presented in the instruction register and is interpreted by the decoder. This stage is the decode stage. As a result of the decode stage, the structure of the instruction is obtained. It is to be noted that there are various types of instructions and not all of them do the same. Thus, depending on the type of instruction, it is needed to determine what execution units are going to be sent to and the most classic way of doing it is through the decoder DECOD. The decoder takes each instruction, divides it internally according to the opcode or instruction itself and the data or memory address where it is located. As a result of the decoding stage, a structure containing all information needed by the next stages of the pipeline is provided. This structure is kept as far as possible along the central processing unit pipeline.

According to the invention, the instructions, that are decoded, are issued or dispatched to the various units for execution. This is the issue stage that is handled by the issuer component ISSU. The control unit of the CPU passes the decoded information as a sequence of control signals to the relevant functional units of the CPU to perform the actions required by the instruction, such as reading values from registers, passing them to the Arithmetic Logic Unit (ALU) to perform mathematical or logic functions on them, and writing the result back to a register. If the ALU is involved, it sends a condition signal back to the control unit. The result generated by the operation is stored in the main memory or sent to an output device. Based on the feedback from the ALU, the PC may be updated to a different address from which the next instruction will be fetched.

According to the invention, the instructions are then executed. Once an instruction is executed, the CPU of the state of the art would terminate the execution of this instruction by discarding its corresponding structure. Nevertheless, according to the invention, this structure is not discarded, but sent to the IPS, in particular to the checker CHECK of the IPS. This is handled as part of the commit stage for example, if the CPU pipeline comprises means to commit COMM.

Coming back to the fetch stage, it was described above that the fetcher FETCH is able to provide the instructions fetched from the memory MEM to the memory buffer of the IPS. In order to do so, the address of the instruction is provided to the fetcher, for example, by the commit component. Once the instruction is fetched, it is communicated to the IPS via the memory buffer for processing in the IPS. The memory buffer of the IPS then stores the instruction that are fetched from the CPU and passes such instructions to the decoder of the IPS.

The decoder DECOD of the IPS then decodes the instructions that are obtained through the memory buffer, as the decoder of the CPU did, in order to obtain, for each instruction, a structure containing all information to be executed. The same instruction that was processed in the CPU pipeline is processed, with a delay, by the IPS. In particular, a time lag does exist between the time when the instruction is provided to the CPU pipeline, and the time when the same instruction is provided to the integrity pipeline supervisor. The instruction decoded by the decoder of the IPS is however not executed, as it is during the execution stage that takes place in the CPU pipeline. According to the invention, the structure of the instructions, that are decoded by the decoder of the IPS, are transferred to the checker CHECK of the IPS.

As a result of this, the checker of the IPS is loading not only the structure of the instructions that are decoded by the decoder of the CPU pipeline, but also the structure of the instructions that are decoded by the decoder of the IPS.

The checker CHECK is then able to compare the structure resulting from the decoded instruction by the decoder of the IPS with the structure that is received from the CPU pipeline, i.e. the structure that is provided by the component COMM, if the CPU pipeline comprises such a component.

In case a of discrepancy identified by the checker CHECK, an alarm is triggered. This alarm is for example a flag.

As a result of the comparison, errors or faults are able to be detected, even in stages that are not covered by EDC.

If an alarm is triggered, the results of the execution of the instruction in the CPU pipeline may be discarded or not. The instruction may be executed once more, from the beginning, being fetched from the memory, decoded and executed. The execution of the computer program may be stopped or not.

It is to be noted that the various steps that are implemented in the CPU pipeline, and those that are implemented in the integrated pipeline supervisor, may be achieved in parallel. The implementation of the method according to the invention does not need to add clock cycles, as the detection of the faults/errors is carried out in parallel with the execution of the instructions by the CPU.

In addition, the method according to the invention does not have any impact on the clock frequency, as the critical path implemented by the central processing unit is not modified.

However, as an alternative embodiment and at the cost of additional gates/additional clock cycles, the invention may also be replicated several times, which will leads to reduce the spatial ability to inject faults, or be duplicated several times; each replication's checking being shifted in time in order to reduce the spatial and temporal ability to inject faults.

It is also to be noted that an instruction, that is processed within the CPU pipeline, may be processed by the integrity pipeline supervisor with a time delay. A fault, that may be injected during the processing of the instruction within the CPU pipeline, that would have an impact on the execution of the instruction within said pipeline, may not have an impact on the processing to the same instruction by the integrity pipeline supervisor, due to this time delay.

Moreover, it is to be noted that the changes made in an existing central processing unit RTL code in order to implement the method according to the invention are very limited, as the method uses dedicated information.

Finally, the impact of the implementation of the method according to the invention on the gate count is very limited.

## Claims

1. A method for securing a central processing unit pipeline comprising the steps of
providing a central processing unit (CPU), the central processing unit comprising a fetcher, a decoder and means for executing computer program instructions decoded by the decoder;
allowing an instruction of a computer program to be fetched by the fetcher of the central processing unit;
allowing the decoder of the central processing unit to decode the instruction fetched in order to obtain a decoded instruction structure;
allowing the means for executing the instruction to execute the instruction according to its decoded structure;
the method further comprising the steps of
providing an integrity pipeline supervisor (IPS), the integrity pipeline supervisor comprising a decoder and a checker;
providing the integrity pipeline supervisor with the instruction of the computer program;
allowing the decoder of the integrity pipeline supervisor to decode the instruction provided to the integrity pipeline supervisor in order to obtain the decoded instruction structure;
providing the checker with the structure of the decoded instruction by the decoder of the integrity pipeline supervisor;
providing the checker with the structure of the instruction decoded by the decoder of the central processing unit;
allowing the checker to compare the structure of the instruction decoded by the decoder of the integrity pipeline supervisor and the structure of the instruction decoded by the decoder of the central processing unit; and
allowing an alarm indicator to be triggered if, as a result of the comparison, the checker detects a discrepancy between the structure of the instruction decoded by the decoder of the integrity pipeline supervisor and the structure of the instruction decoded by the decoder of the central processing unit.

2. The method according to claim 1, wherein the central processing unit further comprises an issuer, the issuer issuing the structure of the instruction decoded by the decoder of the central processing unit to the means for executing the decoded instruction.

3. The method according to one of the previous claims, wherein the structure of the instruction decoded by the decoder of the processing unit, which is provided to the checker of the integrity pipeline supervisor, is the whole structure of said instruction.

4. The method according to one of the claims 1 or 2, wherein the structure of the instruction decoded by the decoder of the processing unit, which is provided to the checker of the integrity pipeline supervisor, is a part of the whole structure of said instruction.

5. The method according to one of the previous claims, wherein the integrated pipeline supervisor further comprises a memory buffer and wherein an address of the instruction, that is provided to the central processing unit, is provided to said memory buffer so that the fetcher of the central processing unit pipeline is able to provide the instruction to the integrity pipeline supervisor.

6. The method according to one of the previous claims, wherein the central processing unit further comprises means to commit the structure of the instruction with the integrity pipeline supervisor.

7. The method according to claims 5 and 6, wherein the address of the instruction is provided by the means to commit the structure of the instruction to the memory buffer.

8. The method according to one of the previous claims, wherein the steps, that are implemented in the integrity pipeline supervisor, are achieved in parallel with the steps that are implemented in the central processing pipeline.

9. The method according to one of the previous claims, wherein a time lag does exist between the time when the instruction is provided to the central processing unit pipeline, and the time when the instruction is provided to the integrity pipeline supervisor.

10. The method according to one of the previous claims, wherein the central processing unit has a Reduced Instruction Set Computer or an ARM central processing unit architecture.

11. The method according to claim 10, wherein the Reduced Instruction Set Computer architecture is a Reduced Instruction Set Computer V (RISC-V) central processing unit architecture.

12. A system for securing a central processing unit pipeline comprising
a central processing unit (CPU), the central processing unit comprising a fetcher, a decoder and means for executing computer program instructions decoded by the decoder;
an integrity pipeline supervisor (IPS), the integrity pipeline supervisor comprising a decoder and a checker;
an alarm indicator;
wherein :
the decoder of the central processing unit decodes an instruction of a computer program allowed to be fetched by the fetcher of the central processing unit in order to obtain a decoded instruction structure;
the means for executing the instruction execute the instruction according to its decoded structure;
the integrity pipeline supervisor is provided with the instruction of computer program;
the decoder of the integrity pipeline supervisor decodes the instruction provided to the integrity pipeline supervisor in order to obtain the decoded instruction structure;
the checker is provided with the structure of the instruction decoded by the decoder of the integrity pipeline supervisor;
the checker is provided with the structure of the instruction decoded by the decoder of the central processing unit;
the checker compares the structure of the instruction decoded by the decoder of the integrity pipeline supervisor and the structure of the instruction decoded by the decoder of the central processing unit;
the alarm indicator is triggered if, as a result of the comparison, the checker detects a discrepancy between the structure of the instruction decoded by the decoder of the integrity pipeline supervisor and the structure of the instruction decoded by the decoder of the central processing unit.
